# EUROPEAN PATENT APPLICATION

(11) **EP 4 660 841 A1**
(43) Date of publication of application: **10.12.2025**
(21) Application number: 24863827.2
(22) Date of filing: 25.04.2024
(51) Int. Cl.: G06F 16/435, G06F 16/44, G06F 16/438

(54) **MULTIMEDIA CONTENT RECOMMENDATION METHOD AND APPARATUS, ELECTRONIC DEVICE AND STORAGE MEDIUM**

(71) Applicant: Beijing Zitiao Network Technology Co., Ltd., Beijing 100190 (CN)
(72) Inventor: XIA, Liang, Beijing 100028 (CN); ZHENG, Ziyang, Beijing 100028 (CN); WANG, Daoyu, Beijing 100028 (CN)
(74) Representative: Isarpatent
(86) International application number: PCT/CN2024/089827
(87) International publication number: WO 2025/222439

(57) **Abstract**

The present disclosure relates to a multimedia content recommendation method and device, an electronic device and a storage medium. The multimedia content recommendation method includes: displaying a first entrance of a recommendation stream of multimedia content in a conversation interface between a user and a first agent; displaying a playing interface of the recommendation stream in response to a trigger operation on the first entrance; determining a multimedia content recommended for the user based on historical interaction data authorized by a user between the user and at least one of the first agent or an agent other than the first agent; and displaying the multimedia content recommended for the user in a playing interface of the recommendation stream.

## Description

### TECHNICAL FIELD

The present disclosure relates to the field of terminal application, in particular to a multimedia content recommendation method and device, an electronic device and a storage medium.

### BACKGROUND

In a multimedia application such as a short video, the user may browse multimedia content such as video and image-text content, and may switch between a plurality of multimedia contents by an operation such as switching. For example, if the user is not interested in the current multimedia content, it is possible to rapidly switch to a next recommended video. If the user is interested in the current multimedia content, it is possible to interact with an author of the multimedia content by posting comments and likes in the comment area, so as to express feelings or learn about more information related to a video.

### SUMMARY

The summary of this invention is provided to introduce concepts in a concise form, which will be described in detail in the following detailed description. The summary of this invention is neither intended to identify the key features or essential features of the technical solution for which protection is sought, nor intended to limit the scope of the technical solution for which protection is sought.

According to some embodiments of the present disclosure, a multimedia content recommendation method is provided. The method includes: displaying a first entrance of a recommendation stream of multimedia content in a conversation interface between a user and a first agent; displaying a playing interface of the recommendation stream in response to a trigger operation on the first entrance; determining a multimedia content recommended for the user based on historical interaction data authorized by a user between the user and at least one of the first agent or an agent other than the first agent; and displaying the multimedia content recommended for the user in a playing interface of the recommendation stream.

According to other embodiments of the present disclosure, a multimedia content recommendation device is provided. The device includes: a first display module for displaying a first entrance of a recommendation stream of multimedia content in a conversation interface between a user and a first agent; a second display module for displaying a playing interface of the recommendation stream in response to a trigger operation on the first entrance; a determining module configured for determining a multimedia content recommended for the user based on historical interaction data authorized by a user between the user and at least one of the first agent or an agent other than the first agent; and a third display module configured for displaying the multimedia content recommended for the user in a playing interface of the recommendation stream.

According to some embodiments of the present disclosure, an electronic device is provided. The electronic device includes: a memory; and a processor coupled to the memory, wherein the processor is configured to perform the multimedia content recommendation method according to any embodiment of the present disclosure based on instructions stored in the memory.

According to some embodiments of the present disclosure, a computer-readable storage medium is provided. The computer-readable storage medium has a computer program stored thereon that, when executed by a processor, performs the multimedia content recommendation method according to any embodiment in the present disclosure.

According to some embodiments of the present disclosure, a computer program is provided. The computer program includes: instructions that, when executed by a processor, cause the processor to perform the multimedia content recommendation method according to any embodiment in the present disclosure.

Other features, aspects and advantages of the present disclosure will become apparent from the following detailed description of exemplary embodiments of the present disclosure with reference to the accompanying drawings.

### BRIEF DESCRIPTION OF THE DRAWINGS

Hereinafter, preferred embodiments of the present disclosure will be described with reference to the accompanying drawings. The accompanying drawings described herein are used to provide a further understanding of the present disclosure, and each of the accompanying drawings together with the following detailed description is included in this specification and forms a part of this specification to explain the present disclosure. It should be understood that, the accompanying drawings in the following description only relate to some embodiments of the present disclosure, but do not constitute a limitation to the present disclosure. In the accompanying drawings:
Fig. 1 shows a schematic flow chart of a multimedia content recommendation method according to some embodiments of the present disclosure.
Fig. 2 shows a schematic flow chart of a recommendation method based on a historical conversation record according to some embodiments of the present disclosure.
Fig. 3 shows a schematic flow chart of recommendation based on an agent according to some embodiments of the present disclosure.
Fig. 4 shows a schematic view of a conversation interface according to some embodiments of the present disclosure.
Fig. 5 shows a schematic view of a playing interface of a recommendation stream of a multimedia content according to some embodiments of the present disclosure.
Fig. 6 shows a schematic view of a conversation interface according to other embodiments of the present disclosure.
Fig. 7 shows a schematic view of an interface of a conversation list according to some embodiments of the present disclosure.
Fig. 8 shows a schematic view of a lock screen interface of terminal according to some embodiments of the present disclosure.
Fig. 9 shows a schematic structural view of a multimedia content recommendation device according to some embodiments of the present disclosure.
Fig. 10 shows a schematic structural view of an electronic device according to some embodiments of the present disclosure.
Fig. 11 shows a schematic structural view of a computer system according to some embodiments of the present disclosure.

It should be understood that, for ease of description, the sizes of various parts shown in the accompanying drawings are not necessarily drawn according to actual proportional relationships. The same or similar reference numerals are used in various accompanying drawings to denote the same or similar components. Therefore, once an item is defined in one accompanying drawing, it might not be discussed further in subsequent accompanying drawings.

### DETAILED DESCRIPTION

The technical solutions in the embodiments of the present disclosure will be explicitly and completely described below in conjunction with the accompanying drawings in the embodiments of the present disclosure. However, apparently, the embodiments described are merely some of the embodiments of the present disclosure, rather than all of the embodiments. The following description of the embodiments is actually only illustrative, and by no means serves as any limitation to the present disclosure and its application or use. It should be understood that the present disclosure may be implemented in various forms, and should not be construed as being limited to the embodiments set forth herein.

It should be understood that the various steps recited in the method embodiments of the present disclosure may be performed according to different sequences, and/or performed in parallel. In addition, the method embodiments may include additional steps and/or omit to perform the illustrated steps. The scope of the present disclosure is not limited in this respect. Unless specifically stated otherwise, the relative arrangement of components and steps, the numerical expressions, and the values set forth in these embodiments should be construed as merely exemplary, but do not limit the scope of the present disclosure.

The term "comprising" and its variations used in the present disclosure represent an open term that includes at least the following elements/features but does not exclude other elements/features, that is, "comprising but not limited to". In addition, the term "including" and its variations used in the present disclosure represent an open term that includes at least the following elements/features, but does not exclude other elements/features, that is, "including but not limited to". Therefore, comprising and including are synonymous. The term "based on" means "at least partially based on".

The term "an embodiment", "some embodiments" or "embodiments" throughout the specification means that a specific feature, structure, or characteristic described in combination with the embodiment(s) is included in at least one embodiment of the present invention. For example, the term "an embodiment" means "at least one embodiment"; the term "another embodiment" means "at least one additional embodiment"; and the term "some embodiments" means "at least some embodiments". Moreover, the presences of the phrases "in an embodiment", "in some embodiments" or "in embodiments" in various places throughout the specification do not necessarily all refer to the same embodiment, but may also refer to the same embodiment.

It should be noted that the concepts such as "first" and "second" mentioned in the present disclosure are only used to distinguish different devices, modules or units, but not to limit the order or interdependence of functions performed by these devices, modules or units. Unless otherwise specified, the concepts such as "first" and "second" are not intended to imply that the objects thus described have to follow a given order in terms of time, space and ranking, or a given order in any other manner.

It should be noted that the modifications of "one" and "a plurality of" mentioned in the present disclosure are illustrative rather than restrictive, and those skilled in the art should understand that they should be understood as "one or more" unless contextually specified otherwise.

The names of messages or information exchanged between multiple devices in the embodiments of the present disclosure are only used for illustrative purposes, but not for limiting the scope of these messages or information.

The embodiments of the present disclosure will be described in detail below in conjunction with the accompanying drawings, but the present disclosure is not limited to these specific embodiments. The following specific embodiments may be combined with each other, and the same or similar concepts or processes will not be described in detail in some embodiments. In addition, in one or more embodiments, specific features, structures, or characteristics may be combined by those of ordinary skill in the art in any suitable manner that will be apparent from the present disclosure.

In the related art, the recommendation stream of the multimedia content tends to determine a multimedia content recommended for the user according to the preference information set by the user and the historical browsing information of the user. However, these information can only reflect a preference of the user embodied during the process of browsing the multimedia content, but cannot comprehensively explore the information that the user is interested in. Therefore, the types of the recommended multimedia content have certain limitations.

With the development of artificial intelligence and machine learning technology, the agent (intelligent agent) may be realized by using a machine learning model. The agent is a virtual object realized by depending on artificial intelligence technology. The agent may, for example, serve as a virtual friend or a virtual expert in a certain field, to receive a message sent from the user and reply a message to the user. For example, when the user is doubtful or desirable to obtain some knowledge rapidly, it is possible to communicate with the agent. The interaction record between the user and the agent may reflect the information that the user is concerned about.

Therefore, in order to push the multimedia content to the user more accurately, the present disclosure integrates the agent with the recommendation stream of multimedia content, displays an entrance of the recommendation stream in a conversation interface between the user and the agent, and determines the multimedia content recommended to the user in the recommendation stream according to historical interaction data between the user and the agent, thereby the recommended multimedia content can be more matched with the information that the user is concerned about and improving the user experience.

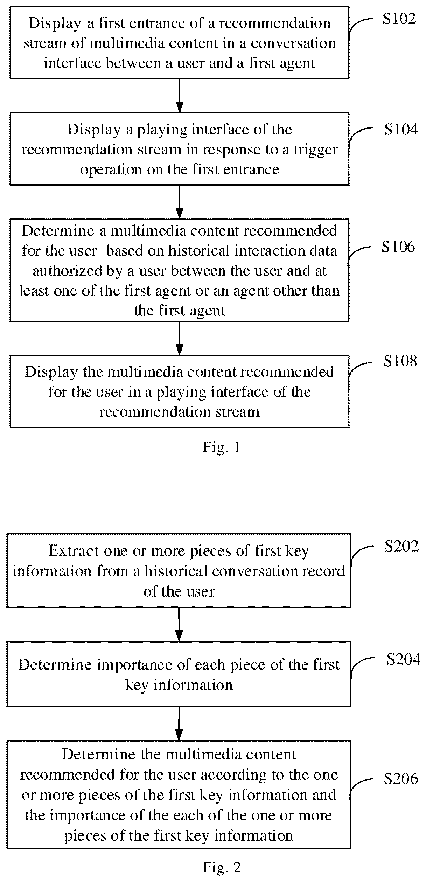

Fig. 1 shows a schematic flow chart of a multimedia content recommendation method according to some embodiments of the present disclosure. As shown in Fig. 1, the recommendation method of this embodiment includes steps S102 to S108.

In step S102, a first entrance of a recommendation stream of multimedia content is displayed in a conversation interface between a user and a first agent.

The agent, for example, including a robot, a digital human, a smart assistant, and a virtual agent of a machine learning model, is an intelligent object capable of automatically replying based on a content input by the user. For example, it may be a conversation robot. The first agent may be any agent. In the embodiments of the present disclosure, the first agent refers to an agent currently talking to the user.

The agent may base on a conversation sent from other subjects in a conversation scenario (for example, a first user, a second user and other users or agents participating in the conversation) to generate a corresponding content. The agent may be implemented in the form of software, hardware or a combination of software and hardware. The agent may be realized by depending on a machine learning model, for example, realized based on a Large Language Model (referred to as LLM for short) or a Foundation Model. The machine learning model may be a generative model configured to output a target content based on the input information. The input information of the generative model includes a processing basis for the generative model during the generation process, for example, the information to which reference is made to perform a generation process and the requirements for the output target content. The generative model includes, for example, a model generated based on a text or a model generated based on an image, and the output of the generative model may include a text, an image or a combination thereof. Of course, the input or output of the generative model may also be data of other modalities, for example, audio, video or a combination of multiple types of data. The generative model may be a single-modality model, for example, a model for generating a text based on a text (referred to as "Text to Text Model" for short) and a model for generating an image based on an image (referred to as "Image to Image Model" for short). Alternatively, the generative model may also be a cross-modality modal, that is, a model of which the input and the output pertain to different modalities, for example, a model for generating an image based on a text (referred to as "Text to Image Model" for short). Alternatively, the input of the generative model may include a plurality of modalities, and the output may also include a plurality of modalities.

In the conversation interface, the user may send a message to the first agent, wherein the message may include one or more of text, image, video, voice or link. The first agent may generate a reply message according to the message sent from the user, wherein the reply message may also include one or more of text, image, video, voice or link. The specific type of the message may be determined according to a type supported by the application and a type of processing supported by the first agent.

The recommendation stream of the multimedia content (or referred to as a multimedia stream for short) includes a plurality of multimedia contents, for example, video, audio, image-text content, image-text notes and the like. The recommendation stream may make recommendations for the user according to a preference of the user. The multimedia content in the recommendation stream may be created and uploaded by the current user or other users, or posted by an application platform. The first entrance of the recommendation stream is used to trigger displaying the recommendation stream. The first entrance may be located in a fixed position of the conversation interface or in a message sent from the first agent. During the process of using the recommendation stream by the user, the video in the recommendation stream may be continuously increased or changed as the browsing of the user proceeds. For example, in the case where a specified first number of the multimedia content is recommended to the user at one time, and the user has browsed a specified proportion therein or a specified second number, it is possible to continue to determine a new multimedia content recommended for the user.

In step S104, a playing interface of the recommendation stream is displayed in response to a trigger operation on the first entrance.

The trigger operation on the first entrance includes, for example, a click operation, a slide operation and the like. For example, in the case where the first entrance is a button, it may be triggered by a clicking operation; or in the case where the first entrance is a tab that is not displayed, it may be triggered by sliding a tab that is currently displayed.

In some embodiments, the playing interface of the recommendation stream displays the multimedia content in an immersive form, for example, full-screen display. The user may browse a video recommended for the user by a switching operation on the multimedia content (for example, sliding up and sliding down).

In step S106, a multimedia content recommended for the user is determined based on historical interaction data authorized by a user between the user and at least one of the first agent or an agent other than the first agent.

The historical interaction data is used to reflect the historical operation information of the user related to the agent, wherein the historical operation information may include a historical conversation record, the information of a used agent and the information of a created agent. The historical interaction data between the user and the agent may reflect the information that the user is concerned about, in need of or possibly interested in during the interaction process between the user and the agent, so that it is possible to explore a preference of the user.

Steps S104 and S106 may be performed in any sequential order or in parallel, and the embodiments of the present disclosure is not limited thereto.

In step S108, the multimedia content recommended for the user is displayed in a playing interface of the recommendation stream.

Since the multimedia content that can be displayed in the playing interface at one time is limited (for example, only one is displayed at the same time), some multimedia content recommended for the user may be played first, and in response to a switching operation by the user, other recommended multimedia content may be played for the user. In the case where the user has browsed all of or a specified proportion or a specified number of the multimedia content recommended for the user that has been determined, it is possible to determine a batch of recommended multimedia contents for the user again based on step S106, and display the recommended multimedia contents to the user through the playing interface of the recommendation stream.

In the above-described embodiments, the recommendation stream of the multimedia content is provided in the conversation interface between the user and the agent, so that it is possible to enable the user to browse the multimedia content recommended for the user during the conversation process with the agent. Moreover, the recommended multimedia content is determined according to the historical interaction data between the user and a current agent or other agents, thereby allowing that the recommended multimedia content is more matched with a preference of the user and improving the user experience.

The embodiment of determining the multimedia content recommended for the user by the present disclosure will be described below in conjunction with several different types of historical interaction data.

Fig. 2 shows a schematic flow chart of a recommendation method based on historical conversation records according to some embodiments of the present disclosure. As shown in Fig. 2, the recommendation method of this embodiment includes steps S202 to S206. The historical conversation record referred to in this embodiment is a conversation record between the user and the agent in a current conversation (i.e., the first agent).

In step S202, one or more pieces of first key information are extracted from a historical conversation record of the user.

The first key information refers to the information that has been discussed in the historical messages between the user and the agent and may represent a conversation subject. Different pieces of key information may be the same or different information extracted from historical messages generated in different time periods, or different information extracted from historical messages generated in the same time period. For example, the user and the agent talked about movie A in the morning and further talked about movie A and travel tips to city B in the afternoon. Then, from the messages of these historical conversations, it is possible to extract three pieces of key information of "movie A", "movie A" and "travel tips to city B", or three pieces of key information of "movie", "movie" and "travel".

In step S204, importance of each piece of the first key information is determined. The importance may be represented by using a numerical value, a level, a category and the like.

In some embodiments, the one or more pieces of the first key information are extracted from the historical message(s) in the historical conversation record between the user and the first agent, and the importance of each of the one or more pieces of the first key information is determined according to time(s) of sending the historical message(s). The generation time of the first key information may be determined according to the time of sending the historical message corresponding to the each piece of the first key information, and the importance of the first key information may be then determined according to a distance between the generation time of the each piece of the first key information and a current time. For example, the distance may be in a negative correlation relationship with the importance, that is, the closer the generation time of the first key information is to the current time, the higher its importance will be.

In some embodiments, the one or more pieces of the first key information are extracted from the historical conversation record between the user and the first agent and between the user and the agent other than the first agent, and the importance of the each of the one or more pieces of first key information is determined according to generation time of the historical conversation and whether the historical conversation record is from the first agent. For example, in the case where other conditions remain unchanged, the importance of the first key information from the first agent is higher than the importance of the first key information from other first agents.

In step S206, the multimedia content recommended for the user is determined according to the one or more pieces of the first key information and the importance of the each of the one or more pieces of the first key information. In the case where other conditions remain unchanged, the multimedia content associated with the first key information with high importance is more likely to be recommended to the user.

In this embodiment, the reference basis for recommending the multimedia content is determined according to the historical conversation record between the user and the agent, and the importance of the reference basis is determined based on the sending time of the message in the historical conversation record or whether the historical conversation comes from the first agent in a current conversation, so that the multimedia content including the information recently followed by the user or the content more related to the message of the current interface may be preferably recommended to the user, thereby improving the recommendation accuracy and improving the user experience.

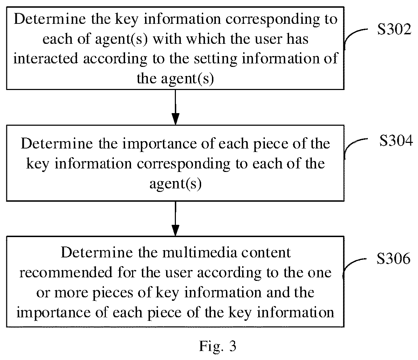

Fig. 3 shows a schematic flow chart of recommendation based on an agent according to some embodiments of the present disclosure. As shown in Fig. 3, the recommendation method of this embodiment includes steps S302 to S306.

In step S302, the key information corresponding to each of agent(s) with which the user has interacted is determined according to the setting information of the agent(s). The interacted agent(s) may be agent(s) created by the user or agent(s) used by the user. The setting information of an agent includes, for example, an attribute and a type of the agent. The attribute includes, for example, a label, a personality, a profile and the like. The type includes, for example, their functional types, for example, daily life, emotion, knowledge and the like.

In step S304, the importance of each piece of the key information corresponding to each of the agent(s) is determined.

In some embodiments, in the case where the interacted agent is a used agent, the key information is second key information. According to at least one of the use time or use frequency of one or agent(s), the importance of each piece of the second key information is determined.

In some embodiments, in the case where the interacted agent is an agent created by the user, the key information is third key information. According to at least one of a creation time, a use time or a use frequency of the one or agent(s), the importance of each piece of the third key information is determined.

For the presentation form and importance of the second key information and the third key information, reference may be made to the description of the first key information in the embodiment of Fig. 2, which will not be described in detail here.

The use time which indicates when the user used the agent, may reflect the use duration of the user and the latest use time of the agent. The use duration may be in a positive correlation relationship with the importance of the second key information. The time length between the latest use of the agent and the current time may be in a negative correlation relationship with the importance. The use frequency which indicates the use times of the agent per unit time, may be in a positive correlation relationship with the importance.

In step S306, the multimedia content recommended for the user is determined according to the one or more pieces of key information and the importance of each piece of the key information. In the case where other conditions remain unchanged, the multimedia content associated with the key information with high importance is more likely to be recommended to the user.

The agent with which the user has interacted reflects the information type about which the user is intended to learn. Therefore, by using the agent with which the user has interacted recommends the multimedia content, the recommended multimedia content may be matched with the interest of the user, which improves the recommendation accuracy and also improves the user experience.

In some embodiments, the multimedia content recommended for the user may be comprehensively determined according to the importance of a part or all of the first key information, the second key information and the third key information. For example, a recommendation reference value of each kind of key information is determined according to a weight of each kind of key information and a weighting result of the importance, and the multimedia content recommended for the user is determined according to the recommendation reference value.

In some embodiments of the present disclosure, the first entrance may be provided in the message sent by the agent, or provided in a fixed position in the conversation interface. Various embodiments will be described below in detail by way of example.

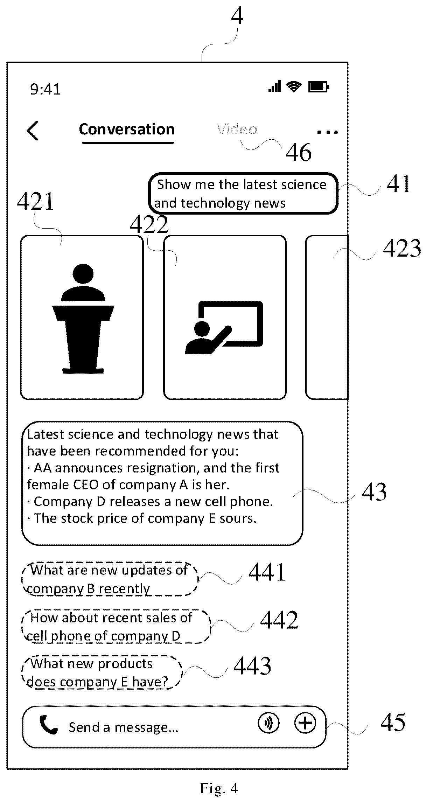

In some embodiments, in the conversation interface between the user and the first agent, a first message sent from the agent to the user and a first preview control of a first multimedia content corresponding to the first message are displayed, wherein the first preview control is a first entrance of the recommendation stream of multimedia content, and the first multimedia content is included in the multimedia content recommended for the user. That is, the message sent from the agent to the user includes a preview control of the multimedia content. The playing interface of the recommendation stream may be displayed by triggering this preview control. An exemplary description of this embodiment will be made below with reference to Fig. 4.

The conversation interface includes messages sent between the user and the agent, for example, it may only include messages sent by the user, messages sent by the agent, or messages sent by the user and the agent at the same time. Fig. 4 shows a schematic view of a conversation interface according to some embodiments of the present disclosure. In the conversation interface 4 shown in Fig. 4, the messages aligned to the right are sent by the user, for example, the message 41 "Show me the latest science and technology news" is sent by the user. The messages aligned to the left are sent by the agent, for example, the videos in the first preview controls 421, 422 and 423 and the message 43 are sent by the agent. In some embodiments, the conversation interface 4 may also display message prompt controls 441, 442 and 443, and may automatically send messages in the message prompt controls to the user in response to triggering the message prompt controls by the user.

In some embodiments, a second message sent from the user to the agent is displayed in the conversation interface; and according to the second message, the first message for responding to the second message and a video corresponding to the first message are generated. For example, in the example shown in Fig. 4, the videos in the first preview controls 421, 422 and 423 and the message 43 are all used to reply to the message 41 sent by the user, that is, the reply content of the agent may be generated according to the message 41 sent by the user, and the reply content includes video and text. The video preview control serves as an entrance to the recommendation stream. For example, in response to triggering (for example, clicking) any of the first preview controls 421, 422, 423 by the user, the interface of the recommendation stream is displayed, and the video corresponding to the video preview control triggered by the user is displayed in the interface of the recommendation stream. In addition to including the corresponding multimedia content in the message, the recommendation stream also includes other multimedia content determined according to historical interaction data.

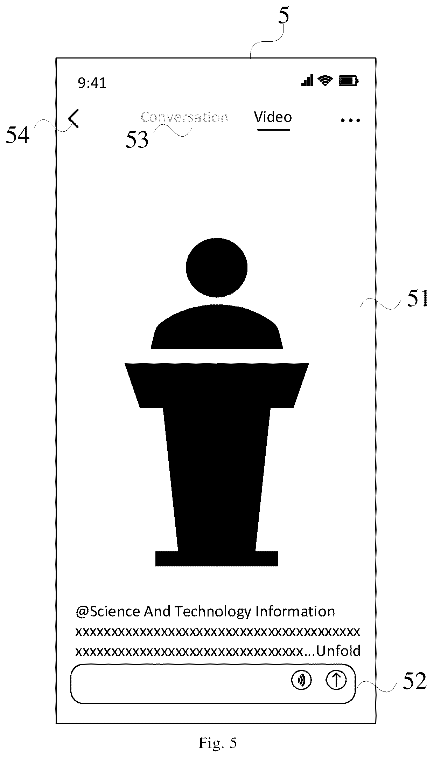

Fig. 5 shows a schematic view of a playing interface of a recommendation stream of a multimedia content according to some embodiments of the present disclosure. As shown in Fig. 5, the multimedia content 51 recommended for the user is displayed in the playing interface 5 of the recommendation stream of the multimedia content. In some embodiments, the playing interface 5 may further include an interaction control 52 between the user and the agent, so as to interact with the agent at any time during the process of browsing the multimedia content.

In addition to replying to the second message sent by the user, the agent may also initiatively send a message to the user, and carry the entrance of the recommendation stream of multimedia content in the message. In some embodiments, in response to displaying the conversation interface, a time when the conversation interface is last displayed for the user is determined; and the first message for welcoming the user back and a video corresponding to the first message are generated in response to that an interval between the time when the conversation interface is last displayed for the user and a current time exceeds a specified threshold. For example, the user has not used a certain agent for a period of time, and when the user accesses the conversation interface corresponding to the agent, the agent may initiatively send a "Welcome Back" message to the user, wherein the message may be generated according to the messages sent by the user in history or the current hot spot information. The message may include only a video preview control, or both a video preview control and a text content. Therefore, after the user has not used the agent for a long time, the user may be guided to interact with the agent and access the recommendation stream by sending a message of welcome back.

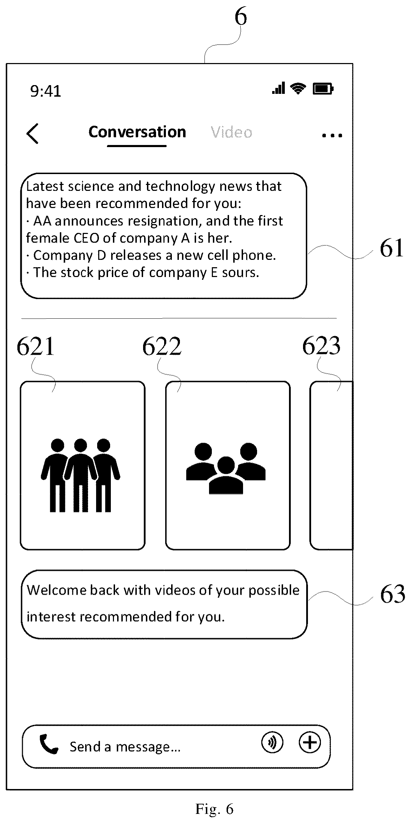

Fig. 6 shows a schematic view of a conversation interface according to other embodiments of the present disclosure. In this embodiment, the interval between the time when the conversation interface is last displayed for the user and the current time exceeds a specified threshold. When the user accesses the conversation interface again, as shown in Fig. 6, the conversation interface 6 includes a last message 61 sent by the agent to the user previously. In addition, the conversation interface also includes a message sent by the agent to the user, wherein the message includes the first preview controls 621, 622 and 623 corresponding to several videos, and the message 63 "Welcome back with videos of your possible interest recommended for you".

In some embodiments, a first entrance of the recommendation stream of multimedia content is displayed at a fixed position on the conversation interface between the user and the first agent. As shown in Fig. 4, the conversation interface 4 may also include a fixed entrance 46 for the recommendation stream of multimedia content (video in this example). In this example, the conversation interface and the interface of the recommendation stream are two tabs in parallel. The display of the interface of the recommendation stream (for example, the interface 5 of the recommendation stream shown in Fig. 5) may be triggered by triggering a tab of the recommendation stream tab (for example, the entrance 46), and the display of the interface of the recommendation stream may also be triggered by performing a sliding operation (for example, sliding left) in the conversation interface 4. Therefore, the user may access the recommendation stream at any time, which improves the user experience. In some embodiments, the interface 5 of the recommendation stream may further include a tab 53 of the conversation interface, so that the display of the conversation interface may be triggered by triggering the tab 53 of the conversation interface, or the display of the interface of the recommendation stream may be triggered by performing a sliding operation (for example, sliding right) in the interface 5 of the recommendation stream. In some embodiments, the interface 5 may further include a return control 54, so that the conversation interface may be displayed in response to triggering the return control 54.

In some embodiments of the present disclosure, it is also possible to provide an entrance of the recommendation stream of multimedia content in a conversation list with agents, thereby making it more convenient for the user to access the recommendation stream. In some embodiments, an interface comprising a conversation list is displayed, wherein the conversation list comprises entrance(s) of conversation interface(s) with one or more agents and a second entrance of the recommendation stream of multimedia content; and the playing interface of the recommendation stream is displayed in response to a trigger operation on the second entrance. Therefore, during the process of using the application, the user may enter the interface of the recommendation stream of the multimedia content more rapidly.

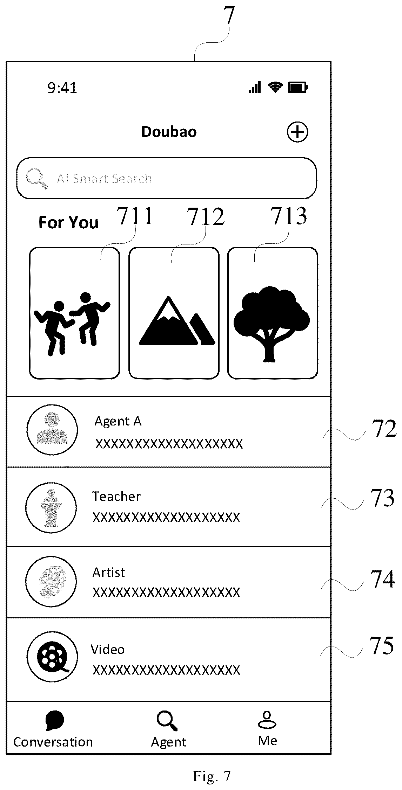

Fig. 7 shows a schematic view of an interface of a conversation list according to some embodiments of the present disclosure. As shown in Fig. 7, the conversation list interface 7 of the includes a conversation list, in which the items 72, 73, 74 and 75 are exemplarily shown, wherein the items 72, 73 and 74 correspond to the agents, that is, a conversation interface of an agent corresponding to a triggered item is displayed in response to any of the items 72, 73 and 74 is triggered; and 75 corresponds to the recommendation stream of multimedia content, that is, the interface of the recommendation stream is displayed in response to item 75 is triggered.

The interface where the conversation list is situated may also directly display some preview controls of the multimedia content recommended for the user, and display the interface of the recommendation stream of multimedia content in response to triggering the preview controls. In some embodiments, an interface comprising a conversation list and a third entrance of the recommendation stream of multimedia content are displayed, wherein the conversation list includes entrance(s) of conversation interface(s) with one or more agents, and the third entrance includes one or more second preview controls of second multimedia content(s) recommended for the user; the playing interface of the recommendation stream is displayed in response to a triggering operation on the second preview control; and the second multimedia content(s) and other multimedia content(s) recommended for the user are displayed in the playing interface of the recommendation stream. As shown in Fig. 7, in some embodiments, the interface 7 may further include second preview controls 711, 712 and 713 corresponding to videos recommended for the user. The preview of the multimedia content recommended for the user is directly displayed so that the user may be guided to access the recommendation stream of the multimedia content by displaying an actually recommended object. In the case where a second preview control is provided on the interface of the conversation list, the conversation list may or may not include a second entrance of the recommendation stream of the multimedia content (for example, an item 75). In the case where the conversation list includes a second entrance, the interface of the conversation list may or may not include a second preview control.

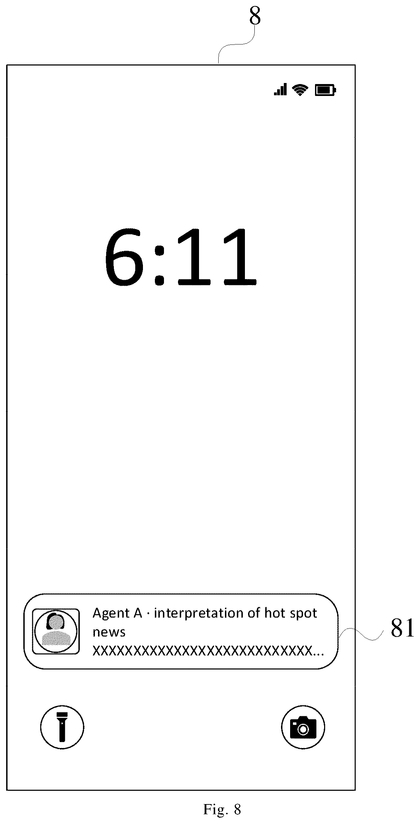

External to the application, the user may be guided to access the recommendation stream of the multimedia content by pushing a message. For example, the information related to the recommended multimedia content may be sent to the user by pushing a system message. In some embodiments, a third message is pushed to a user equipment of the user through a second agent, wherein the third message is associated with a third multimedia content, and the second agent is same as or different from the first agent, that is, the second agent may be any agent. A conversation interface between the user and the second agent is displayed in response to a trigger operation on the pushed third message. For the conversation interface, reference may be made to the aforementioned embodiments, which will not be described in detail here. The third message and a third preview control of the third multimedia content are displayed in the conversation interface between the user and the second agent; the playing interface of the recommendation stream is displayed in response to a trigger operation on the third preview control; and the third multimedia content and the multimedia content recommended for the user are displayed in the playing interface of the recommendation stream. The third message, the third multimedia content, and the third preview control are only used to distinguish the names in different embodiments, and for their specific implementations and interface styles, reference may be made to the description of the corresponding controls and content in the conversation interface in the aforementioned embodiments, which will not be described in detail here. The message push interface will be specifically described below with reference to Fig. 8.

Fig. 8 shows a schematic view of a lock screen interface of terminal according to some embodiments of the present disclosure. As shown in Fig. 8, in the lock screen interface 8, a message 81 pushed to the user through the agent A is displayed, wherein the message 81 includes the interpretation of recent hot spot news, and the message is related to the third multimedia content (that is, the multimedia content pushed to the user). For example, the message may be a descriptive text carried by these multimedia contents or the information generated by semantic understanding of the multimedia content. In response to a trigger operation on the message 81 by the user, it is possible to jump to an application where the agent is situated and open the conversation interface with the agent A in the application. Fig. 8 only describes the lock screen interface as an example. In addition, on the desktop of the operating system of the user terminal or the display interface of other applications, the pushed message 81 may also be displayed through the information push function of the operating system, which will not be described in detail here.

Various embodiments of the method of the present disclosure have been described above. The device for implementing the method of the above-described embodiments will be further described below.

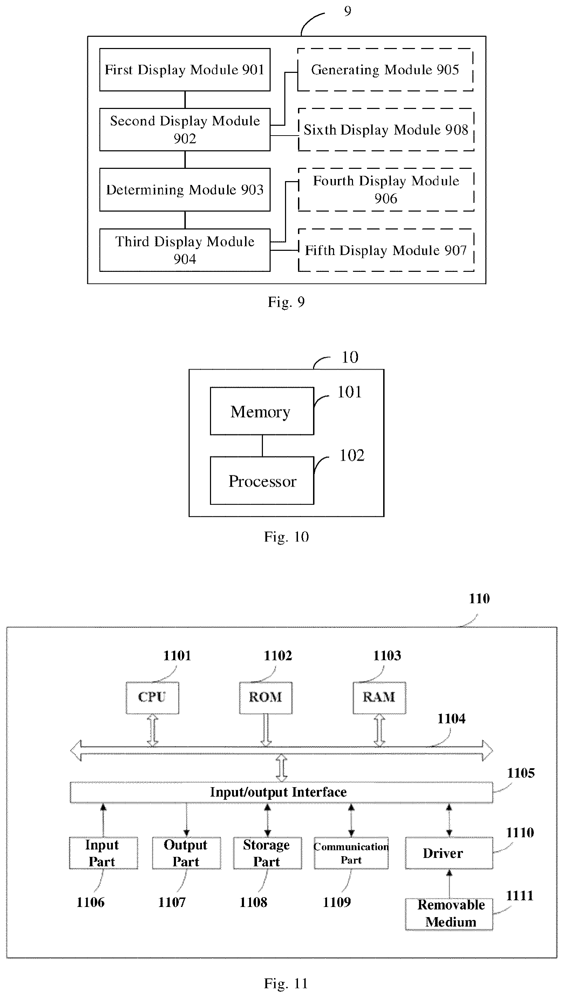

Fig. 9 shows a schematic structural view of a multimedia content recommendation device according to some embodiments of the present disclosure. As shown in Fig. 9, the multimedia content recommendation device 9 of this embodiment comprises: a first display module 901 configured for displaying a first entrance of a recommendation stream of multimedia content in a conversation interface between a user and a first agent; a second display module 902 configured for displaying a playing interface of the recommendation stream in response to a trigger operation on the first entrance; a determining module 903 configured for determining a multimedia content recommended for the user based on historical interaction data authorized by a user between the user and at least one of the first agent or an agent other than the first agent; and a third display module 904 configured for displaying the multimedia content recommended for the user in a playing interface of the recommendation stream.

In some embodiments, the historical interaction data authorized by the user comprises a historical conversation record, and the determining module 903 is further configured for extracting one or more pieces of first key information from historical message(s) in the historical conversation record between the user and the first agent; determining importance of each of the one or more pieces of the first key information according to time(s) of sending the historical message(s); and determining the multimedia content recommended for the user according to the one or more pieces of the first key information and the importance of the each of the one or more pieces of the first key information.

In some embodiments, the historical interaction data authorized by the user comprises a historical conversation record, and the determining module 903 is further configured for: extracting one or more pieces of first key information from the historical conversation record between the user and the first agent and between the user and the agent other than the first agent; determining importance of each of the one or more pieces of first key information according to generation time of the historical conversation and whether the historical conversation record is from the first agent; and determining the multimedia content recommended for the user according to the one or more pieces of the first key information and the importance of the each of the one or more pieces of the first key information.

In some embodiments, the historical interaction data authorized by the user comprises setting information of agent(s) used by the user, and the determining module 903 is further configured for: determining second key information corresponding to each of the agent(s) used by the user according to the setting information of the agent(s) used by the user; determining importance of each piece of the second key information according to at least one of use time(s) or use frequency(es) of the one or agent(s); and determining the multimedia content recommended for the user according to one or more pieces of the second key information and the importance of the each piece of the second key information.

In some embodiments, the historical interaction data authorized by the user comprises setting information of agent(s) created by the user, and the determining module 903 is further configured for: determining third key information corresponding to each of the agent(s) according to the setting information of the agent(s) created by the user; determining importance of each piece of the third key information according to at least one of creation time(s), use time(s) or use frequency(es) of the one or agent(s); and determining the multimedia content recommended for the user according to one or more pieces of the third key information and the importance of the each piece of the third key information..

In some embodiments, the setting information includes at least one of an attribute or a type.

In some embodiments, the first display module 901 is further configured for displaying, in the conversation interface between the user and the first agent, a first message sent from the agent to the user and a first preview control of a first multimedia content corresponding to the first message, wherein the first preview control is a first entrance of the recommendation stream of multimedia content, and the first multimedia content is comprised in the multimedia content recommended for the user.

In some embodiments, the multimedia content recommendation device 9 further includes a generating module 905.

In some embodiments, the generating module 905 is further configured for: displaying a second message sent from the user to the agent in the conversation interface; and generating, according to the second message, the first message for responding to the second message and a video corresponding to the first message.

In some embodiments, the generating module 905 is further configured for: determining, in response to displaying the conversation interface, a time when the conversation interface is last displayed for the user; and generating the first message for welcoming the user back and a video corresponding to the first message in response to that an interval between the time when the conversation interface is last displayed for the user and a current time exceeds a specified threshold.

In some embodiments, the first display module 901 is further configured for displaying a first entrance of the recommendation stream of multimedia content at a fixed position on the conversation interface between the user and the first agent.

In some embodiments, the multimedia content recommendation device 9 further includes a fourth display module 906 configured for: displaying an interface comprising a conversation list, wherein the conversation list comprises entrance(s) of conversation interface(s) with one or more agents and a second entrance of the recommendation stream of multimedia content; and displaying the playing interface of the recommendation stream in response to a trigger operation on the second entrance..

In some embodiments, the multimedia content recommendation device 9 further comprises a fifth display module 907 configured for: displaying an interface comprising a conversation list and a third entrance of the recommendation stream of multimedia content, wherein the conversation list comprises entrance(s) of conversation interface(s) with one or more agents, and the third entrance comprises one or more second preview controls of second multimedia content(s) recommended for the user; displaying the playing interface of the recommendation stream in response to a triggering operation on the second preview control; and displaying the second multimedia content(s) and other multimedia content(s) recommended for the user in the playing interface of the recommendation stream.

In some embodiments, the multimedia content recommendation device 9 further comprises a sixth display module 908 configured for: pushing a third message to a user equipment of the user through a second agent, wherein the third message is associated with a third multimedia content, and the second agent is same as or different from the first agent; displaying a conversation interface between the user and the second agent in response to a trigger operation on the pushed third message; displaying the third message and a third preview control of the third multimedia content in the conversation interface between the user and the second agent; displaying the playing interface of the recommendation stream in response to a trigger operation on the third preview control; and displaying the third multimedia content and the multimedia content recommended for the user in the playing interface of the recommendation stream.

It should be noted that, the above-described units are only logical modules divided according to the specific functions realized by the same, but not intended to limit specific implementations. For example, it is possible to be implemented in the form of software, hardware, or a combination of software and hardware. In actual implementation, each of the above-described units may be implemented as an independent physical entity, or may also be implemented by a single entity (for example, a processor (CPU or DSP, and the like), an integrated circuit, etc.). In addition, the above-described respective units are shown with dotted lines in the accompanying drawings to indicate that these units may not actually exist, and the operations/functions realized by them may be implemented by the processing circuit itself.

In addition, although not shown, the device may also include a memory, which may store various information generated by the device and various units included in the device during operation, programs and data for operation, data to be sent by the communication unit, and the like. The memory may be a volatile memory and/or a non-volatile memory. For example, the memory may include, but is not limited to, a random access memory (RAM), a dynamic random access memory (DRAM), a static random access memory (SRAM), a read only memory (ROM), and a flash memory. Of course, the memory may also be located outside the device. Alternatively, although not shown, the device may also include a communication unit, which may be used to communicate with other devices. In one example, the communication unit may be implemented in an appropriate manner known in the art, for example, including communication components such as antenna arrays and/or radio frequency links, various types of interfaces, communication units, and the like, which will not be described in detail here. Detailed description will not be repeated here. In addition, the device may also include other components not shown, such as a radio frequency link, a baseband processing unit, a network interface, a processor, a controller, and the like, which will not be described in detail here. Detailed description will not be repeated here.

In some embodiments of the present disclosure, an electronic device is also provided. Fig. 10 shows a schematic structural view of an electronic device according to some embodiments of the present disclosure. For example, in some embodiments, the electronic device 10 which may be various types of devices, for example may include, but is not limited to mobile terminals such as mobile phones, notebook computers, digital broadcast receivers, PDAs (personal digital assistants), PADs (pad computers), PMP (Portable Multimedia Player) and in-vehicle terminals (for example, in-vehicle navigation terminals); and fixed terminals such as digital TVs, desktop computers and the like. For example, the electronic device 10 may include a display panel for displaying data and/or execution results used in the solution according to the present disclosure. For example, the display panel may have various shapes, such as a rectangular panel, an oval panel, or a polygonal panel. In addition, the display panel may be not only a flat panel, but also a curved panel, or even a spherical panel.

As shown in Fig. 10, the electronic device 10 of this embodiment includes: a memory 101, and a processor 102 coupled to the memory 101. It should be noted that the components of the electronic device 10 shown in Fig. 10 are only exemplary, but not restrictive. According to actual application requirements, the electronic device 10 may also have other components. The processor 102 may control other components in the electronic device 10 to perform desired functions.

In some embodiments, the memory 101 is configured to store one or more computer-readable instructions. When the processor 102 is configured to run computer-readable instructions, the computer-readable instructions are executed by the processor 102 to implement the method according to any of the above-described embodiments. For the specific implementation of each step of the method and the related content as explained, it is possible to refer to the above-described embodiments, which will not be described in detail here.

For example, the processor 102 and the memory 101 may directly or indirectly communicate with each other. For example, the processor 102 and the memory 101 may communicate through a network. The network may include a wireless network, a wired network, and/or any combination of a wireless network and a wired network. The processor 102 and the memory 101 may also communicate with each other through a system bus, which is not limited in the present disclosure.

For example, the processor 102 may be embodied as various appropriate processors, processing devices and the like, such as a central processing unit (CPU), a graphics processing unit (GPU) and a network processor (NP); and may also be a digital signal processor (DSP), an application specific integrated circuit (ASIC), a field programmable gate array (FPGA) or other programmable logic devices, a discrete gate or transistor logic device, and a discrete hardware component. The central processing unit (CPU) may be X86 or ARM architecture and the like. For example, the memory 101 may include any combination of various forms of computer-readable storage media, such as a volatile memory and/or a non-volatile memory. The memory 101 may include, for example, a system memory. The memory 101 may include, for example, a system memory. The system memory, for example, stores an operating system, an application program, a boot loader, a database, and other programs. Various application programs and various data may also be stored in the storage medium.

In addition, according to some embodiments of the present disclosure, in the case where various operations/processes according to the present disclosure are implemented by software and/or firmware, it is possible to install a program constituting the software to a computer system with a dedicated hardware structure, for example, the computer system 110 shown in Fig. 11, from a storage medium or a network. When the computer system is installed with various programs, it is possible to perform various functions, including the functions described previously. Fig. 11 shows a schematic structural view of a computer system according to some embodiments of the present disclosure.

In Fig. 11, a central processing unit (CPU) 1101 executes various processes according to a program stored in a read only memory (ROM) 1102 or a program loaded from a storage portion 1108 to a random access memory (RAM) 1103. In the RAM 1103, data required when the CPU 1101 executes various processes and the like is also stored as necessary. The central processing unit which is only exemplary, may also be other types of processors, such as the processors described above. The ROM 1102, the RAM 1103, and the storage portion 1108 may be various forms of computer-readable storage media, as described below. It should be noted that although the ROM 1102, the RAM 1103, and the storage device 1108 are shown in Fig. 11 respectively, one or more of them may be combined or located in the same or different memories or storage modules.

The CPU 1101, the ROM 1102, and the RAM 1103 are connected to each other via a bus 1104. The input/output interface 1105 is also connected to the bus 1104.

The following components are connected to the I/O interface 1105: an input portion 1106, such as a touch screen, a touch panel, a keyboard, a mouse, an image sensor, a microphone, an accelerometer and gyroscope; an output portion 1107, including a display, such as a cathode ray tube (CRT), a liquid crystal display (LCD), a speaker, and a vibrator; a storage portion 1108, including a hard disk, and a tape; and a communication portion 1109, including a network interface card such as a LAN card and a modem. The communication portion 1109 allows execution of communication processing via a network such as Internet. It is easily conceivable that, although the devices or modules in the computer system 110 shown in Fig. 11 communicate through the bus 1104, it is possible to also communicate through a network or other means, wherein the network may include a wireless network, a wired network, and/or any combination of a wireless network and a wired network.

The driver 1110 is also connected to the input/output interface 1105 as required. A removable medium 1111 such as a magnetic disk, an optical disk, a magneto-optical disk and a semiconductor memory is mounted on the drive 1110 as necessary, so that the computer program read out therefrom is installed into the storage portion 1108 as necessary.

In a case of implementing the above-described series of processes by software, the program constituting a software may be installed from a network such as Internet or a storage medium such as a removable medium 1111.

According to the embodiment of the present disclosure, the process described above with reference to the flowchart may be implemented as a computer software program. For example, the embodiment of the present disclosure includes a computer program product including a computer program carried on a computer-readable medium, wherein the computer program contains program codes for performing the method shown in the flowchart. In such embodiment, the computer program may be downloaded and installed from the network through the communication device 1109, installed from the storage device 1108, or installed from the ROM 1102. When the computer program is executed by the CPU 1101, the above-described functions defined in the method of the embodiment of the present disclosure are executed.

It should be noted that in the context of the present disclosure, a computer-readable medium may be a tangible medium, which may contain or store a program for use by the instruction execution system, apparatus, or device or use in conjunction with the instruction execution system, apparatus, or device. The computer-readable medium may be a computer-readable signal medium, a computer-readable storage medium or any combination thereof. The computer-readable storage medium may be, for example, but is not limited to: an electrical, magnetic, optical, electromagnetic, infrared, or semiconductor system, device, or apparatus, or a combination thereof. More specific examples of the computer-readable storage medium may include, but is not limited to: an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium that contains or stores a program which may be used by an instruction execution system, apparatus, or device or used in combination therewith. In the present disclosure, the computer-readable signal medium may include a data signal propagated in a baseband or as a part of a carrier wave, wherein a computer-readable program code is carried. Such propagated data signal may take many forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program for use by an instruction execution system, apparatus, or device or in conjunction with therewith. The program code contained on the computer-readable medium may be transmitted by any suitable medium, including but not limited to: a wire, an optical cable, radio frequency (RF), and the like, or any suitable combination thereof.

The above-described computer-readable medium may be included in the above-described electronic device; or may also exist alone without being assembled into the electronic device.

In some embodiments, a computer program is also provided. The computer program comprises instructions, which, when executed by a processor, cause the processor to execute the method of any of the above-described embodiments. For example, the instructions may be embodied as a computer program code.

In an embodiment of the present disclosure, the computer program code for performing the operations of the present disclosure may be written in one or more programming languages or a combination thereof. The above-described programming languages include but are not limited to object-oriented programming languages, such as Java, Smalltalk, and C++, and also include conventional procedural programming languages, such as "C" language or similar programming languages. The program code may be executed entirely on the user's computer, partly on the user's computer, executed as an independent software package, partly on the user's computer and partly executed on a remote computer, or entirely executed on the remote computer or server. In a case of a remote computer, the remote computer may be connected to the user's computer through any kind of network (including a local area network (LAN) or a wide area network (WAN)), or may be connected to an external computer (for example, connected through Internet using an Internet service provider).

The flowcharts and block views in the accompanying drawings illustrate the possibly implemented architectures, functions, and operations of the system, method, and computer program product according to various embodiments of the present disclosure. In this regard, each block in the flowchart or block view may represent a module, a program segment, or a part of code, wherein the module, the program segment, or the part of code contains one or more executable instructions for realizing a specified logic function. It should also be noted that, in some alternative implementations, the functions marked in the block may also occur in a different order from the order marked in the accompanying drawings. For example, two blocks shown in succession which may actually be executed substantially in parallel, may sometimes also be executed in a reverse order, depending on the functions involved. It is also to be noted that each block in the block view and/or flowchart, and a combination of the blocks in the block view and/or flowchart, may be implemented by a dedicated hardware-based system that performs the specified functions or operations, or may be implemented by a combination of dedicated hardware and computer instructions.

The modules, components, or units involved in the described embodiments of the present disclosure may be implemented in software or hardware. Wherein, the names of the modules, components or units do not constitute a limitation on the modules, components or units themselves under certain circumstances.

The functions described hereinabove may be performed at least in part by one or more hardware logic components. For example, without limitation, the exemplary hardware logic components that may be used include: a Field Programmable Gate Array (FPGA), an Application Specific Integrated Circuit (ASIC), an Application Specific Standard Product (ASSP), a System on Chip (SOC), a Complex Programmable Logical device (CPLD) and the like.

The above description is only an explanation of some embodiments of the present disclosure and the applied technical principles. Those skilled in the art should understand that the scope of disclosure involved in this disclosure is not limited to the technical solutions formed by the specific combination of the above technical features, and at the same time should also cover other technical solutions formed by arbitrarily combining the above-described technical features or equivalent features without departing from the above disclosed concept. For example, the above-described features and the technical features disclosed in the present disclosure (but not limited thereto) having similar functions are replaced with each other to form a technical solution.

In the description provided herein, many specific details are elaborated. However, it is understood that the embodiments of the present invention may be implemented without these specific details. In other cases, in order not to obscure the understanding of the description, the well-known methods, structures and technologies are not demonstrated in detail.

In addition, although the operations are depicted in a specific order, this should not be understood as requiring these operations to be performed in the specific order shown or performed in a sequential order. Under certain circumstances, multitasking and parallel processing might be advantageous. Likewise, although several specific implementation details are contained in the above discussion, these should not be construed as limiting the scope of the present disclosure. Certain features that are described in the context of individual embodiments may also be implemented in combination in a single embodiment. On the contrary, various features described in the context of a single embodiment may also be implemented in multiple embodiments individually or in any suitable sub-combination.

Although some specific embodiments of the present disclosure have been described in detail by way of examples, those skilled in the art should understand that the above examples are only for an illustrative purpose, rather than limiting the scope of the present disclosure. Those skilled in the art should appreciate that modifications to the above embodiments may be made without departing from the scope and spirit of the present disclosure. The scope of the present disclosure is defined by the appended claims.

## Claims

1. A multimedia content recommendation method, comprising:
displaying a first entrance of a recommendation stream of multimedia content **in** a conversation interface between a user and a first agent;
displaying a playing interface of the recommendation stream in response to a trigger operation on the first entrance;
determining a multimedia content recommended for the user based on historical interaction data authorized by a user between the user and at least one of the first agent or an agent other than the first agent; and
displaying the multimedia content recommended for the user **in** a playing interface of the recommendation stream.

2. The recommendation method according to claim 1, wherein the historical interaction data authorized by the user comprises a historical conversation record, and the determining the multimedia content recommended for the user comprises:
extracting one or more pieces of first key information from historical message(s) **in** the historical conversation record between the user and the first agent;
determining importance of each of the one or more pieces of the first key information according to time(s) of sending the historical message(s); and
determining the multimedia content recommended for the user according to the one or more pieces of the first key information and the importance of the each of the one or more pieces of the first key information.

3. The recommendation method according to claim 1 or 2, wherein the historical interaction data authorized by the user comprises a historical conversation record, and the determining the multimedia content recommended for the user comprises:
extracting one or more pieces of first key information from the historical conversation record between the user and the first agent and between the user and the agent other than the first agent;
determining importance of each of the one or more pieces of first key information according to generation time of the historical conversation and whether the historical conversation record is from the first agent; and
determining the multimedia content recommended for the user according to the one or more pieces of the first key information and the importance of the each of the one or more pieces of the first key information.

4. The recommendation method according to any of claims 1 to 3, wherein the historical interaction data authorized by the user comprises setting information of agent(s) used by the user, and the determining the multimedia content recommended for the user comprises:
determining second key information corresponding to each of the agent(s) used by the user according to the setting information of the agent(s) used by the user;
determining importance of each piece of the second key information according to at least one of use time(s) or use frequency(es) of the one or agent(s); and
determining the multimedia content recommended for the user according to one or more pieces of the second key information and the importance of the each piece of the second key information.

5. The recommendation method according to any of claims 1 to 4, wherein the historical interaction data authorized by the user comprises setting information of agent(s) created by the user, and the determining the multimedia content recommended for the user comprises:
determining third key information corresponding to each of the agent(s) according to the setting information of the agent(s) created by the user;
determining importance of each piece of the third key information according to at least one of creation time(s), use time(s) or use frequency(es) of the one or agent(s); and
determining the multimedia content recommended for the user according to one or more pieces of the third key information and the importance of the each piece of the third key information.

6. The recommendation method according to claim 4 or 5, wherein the setting information comprises at least one of an attribute or a type.

7. The recommendation method according to any of claims 1 to 6, wherein the displaying the first entrance of the recommendation stream of multimedia content in the conversation interface between the user and the first agent comprises:
displaying, in the conversation interface between the user and the first agent, a first message sent from the agent to the user and a first preview control of a first multimedia content corresponding to the first message, wherein the first preview control is a first entrance of the recommendation stream of multimedia content, and the first multimedia content is comprised in the multimedia content recommended for the user.

8. The recommendation method according to claim 7, further comprising:
displaying a second message sent from the user to the agent in the conversation interface; and
generating, according to the second message, the first message for responding to the second message and a video corresponding to the first message.

9. The recommendation method according to claim 7 or 8, further comprising:
determining, in response to displaying the conversation interface, a time when the conversation interface is last displayed for the user; and
generating the first message for welcoming the user back and a video corresponding to the first message in response to that an interval between the time when the conversation interface is last displayed for the user and a current time exceeds a specified threshold.

10. The recommendation method according to any of claims 1 to 9, wherein the displaying the first entrance of the recommendation stream of multimedia content in the conversation interface between the user and the first agent comprises:
displaying a first entrance of the recommendation stream of multimedia content at a fixed position on the conversation interface between the user and the first agent.

11. The recommendation method according to any of claims 1 to 10, further comprising:
displaying an interface comprising a conversation list, wherein the conversation list comprises entrance(s) of conversation interface(s) with one or more agents and a second entrance of the recommendation stream of multimedia content; and
displaying the playing interface of the recommendation stream in response to a trigger operation on the second entrance.

12. The recommendation method according to any of claims 1 to 11, further comprising:
displaying an interface comprising a conversation list and a third entrance of the recommendation stream of multimedia content, wherein the conversation list comprises entrance(s) of conversation interface(s) with one or more agents, and the third entrance comprises one or more second preview controls of second multimedia content(s) recommended for the user;
displaying the playing interface of the recommendation stream in response to a triggering operation on the second preview control; and
displaying the second multimedia content(s) and other multimedia content(s) recommended for the user in the playing interface of the recommendation stream.

13. The recommendation method according to any of claims 1 to 12, further comprising:
pushing a third message to a user equipment of the user through a second agent, wherein the third message is associated with a third multimedia content, and the second agent is same as or different from the first agent;
displaying a conversation interface between the user and the second agent in response to a trigger operation on the pushed third message;
displaying the third message and a third preview control of the third multimedia content in the conversation interface between the user and the second agent;
displaying the playing interface of the recommendation stream in response to a trigger operation on the third preview control; and
displaying the third multimedia content and the multimedia content recommended for the user in the playing interface of the recommendation stream.

14. A multimedia content recommendation device, comprising:
a first display module for displaying a first entrance of a recommendation stream of multimedia content in a conversation interface between a user and a first agent;
a second display module for displaying a playing interface of the recommendation stream in response to a trigger operation on the first entrance;
a determining module configured for determining a multimedia content recommended for the user based on historical interaction data authorized by a user between the user and at least one of the first agent or an agent other than the first agent; and
a third display module configured for displaying the multimedia content recommended for the user in a playing interface of the recommendation stream.

15. An electronic device, comprising:
a memory; and
a processor coupled to the memory, wherein the processor is configured to, based on instructions stored in the memory, perform the multimedia content recommendation method according to any of claims 1 to 13.

16. A computer readable storage medium, having a computer program stored thereon that, when executed by a processor, implements the multimedia content recommendation method according to any of claims 1 to 13.

17. A computer program product that when run on a computer, causes the computer to implement the multimedia content recommendation method according to any of claims 1 to 13.

18. A computer program, including:
instructions that, when executed by a processor, cause the processor to perform the multimedia content recommendation method according to any of claims 1 to 13.
